# EUROPÄISCHE PATENTANMELDUNG

(11) **EP 4 729 796 A1**
(43) Veröffentlichungstag der Anmeldung: **22.04.2026**
(21) Anmeldenummer: 24206855.9
(22) Anmeldetag: 16.10.2024
(51) Int. Cl.: F16C 19/16, F16C 33/38, F16C 33/76, F16C 33/78, B25D 11/06, F16C 23/08

(54) **TAUMELSCHEIBENLAGER FÜR EIN ELEKTROWERKZEUG, ELEKTROWERKZEUG**

(71) Anmelder: Hilti Aktiengesellschaft, 9494 Schaan (LI)
(72) Erfinder: Fleck, Joshua, 80469 München (DE); Nagel, Benedikt, 86911 Dießen am Ammersee (DE)
(74) Vertreter: Hilti Aktiengesellschaft Corporate Intellectual Property

(57) **Zusammenfassung**

Die Erfindung betrifft ein Taumelscheibenlager (1) für ein Elektrowerkzeug (2) mit einem Schlagwerk (3), umfassend
- einen Innenring (4),
- einen Außenring (5),
- Lagerkugeln (6), über die der Außenring (5) auf dem Innenring (4) beweglich gelagert ist, und
- einen Käfig (7), in dem die Lagerkugeln (6) geführt sind.

Erfindungsgemäß ist zur Abdichtung eines Lagerspalts (8) zwischen dem Innenring (4) und dem Außenring (5) beidseits des Lagerspalts (8) jeweils eine Dichtscheibe (9) angeordnet, die
(i) am Käfig (7) befestigt ist oder durch den Käfig (7) ausgebildet wird und sich in radialer Richtung zumindest bereichsweise über den Außenring (5) erstreckt oder
(ii) am Außenring (5) befestigt ist oder durch den Außenring (5) ausgebildet wird und sich in radialer Richtung zumindest bereichsweise über den Käfig (7) erstreckt.

Die Erfindung betrifft ferner ein Elektrowerkzeug (2) mit einem Schlagwerk (3) und einem erfindungsgemäßen Taumelscheibenlager (1).

## Beschreibung

Die Erfindung betrifft ein Taumelscheibenlager für ein Elektrowerkzeug gemäß dem Oberbegriff des Anspruchs 1. Darüber hinaus betrifft die Erfindung ein Elektrowerkzeug mit einem erfindungsgemäßen Taumelscheibenlager.

Anwendungsbereich der Erfindung sind vornehmlich handgehaltene Elektrowerkzeuge, insbesondere Bohr- und/oder Meißelhämmer. Diese weisen ein Schlagwerk zur Aufbringung der notwendigen Schlagenergie auf ein Werkzeug auf.

### Stand der Technik

Bekannt sind Elektrowerkzeuge mit einem Schlagwerk, das über einen elektrischen Antrieb mit einer Antriebswelle angetrieben wird. Die Drehbewegung der Antriebswelle muss dabei in eine translatorische Bewegung eines Arbeitszylinders des Schlagwerks gewandelt werden. Die Antriebswelle und der Arbeitszylinder können hierzu über eine Kopplungseinrichtung mit einem Taumelscheibenlager verbunden sein.

Eine derartige Kopplungs- bzw. Übertragungseinrichtung für eine Schlagvorrichtung geht beispielhaft aus der DE 10 2008 040 765 A1 hervor. Die Übertragungseinrichtung weist ein Taumellager mit einem Innenring und einem Außenring auf. Der Innenring ist auf einer Zwischenwelle angeordnet. Der Außenring ist auf dem Innenring beweglich gelagert. Außenumfangseitig, an sich gegenüberliegenden Seiten, weist der Außenring jeweils einen Taumelschenkel auf, der tangential in Bezug auf den Außenring ausgerichtet ist. An ihren freien Enden weisen die Taumelschenkel jeweils eine Lagerbohrung auf, in denen ein senkrecht zu den Taumelschenkeln verlaufender Lagerbolzen aufgenommen ist. Dieser ist über ein stiftartiges Übertragungselement mit einem Kolben einer Kolbeneinheit verbunden. Mit Hilfe der Übertragungseinrichtung kann eine Rotationsbewegung der Zwischenwelle in eine axiale Bewegung des Kolben umgesetzt werden.

Taumel- bzw. Taumelscheibenlager der vorstehend genannten Art bilden zwischen dem Innenring und dem Außenring einen Lagerspalt aus, in dem Lagerkugeln aufgenommen sind, die über einen Käfig geführt werden. Dringen Partikel, beispielsweise Staubpartikel, in den Lagerspalt ein, erhöhen diese den Verschleiß im Bereich der auf Rollreibung beanspruchten Kontaktflächen am Innenring, am Außenring und an den Lagerkugeln. Um das Eindringen von Partikeln in den Lagerspalt zu verhindern, kann eine Abdichtung vorgesehen werden. Problematisch dabei ist jedoch, dass der für die Abdichtung zur Verfügung stehende Bauraum begrenzt ist und sich der Abstand zwischen dem Außenring und dem Innenring bei einer Bewegung des Außenrings ändert. Der Einsatz von Standarddichtungen ist daher in der Regel nicht möglich.

Die vorliegende Erfindung ist daher mit der Aufgabe befasst, ein Abdichtungskonzept für ein Taumelscheibenlager bereitzustellen, das eine effektive Abdichtung eines Lagerspalts gegenüber Partikeln ermöglicht sowie einfach und kostengünstig umsetzbar ist.

Zur Lösung der Aufgabe wird das Taumelscheibenlager mit den Merkmalen des Anspruchs 1 vorgeschlagen. Vorteilhafte Weiterbildungen der Erfindung sind den Unteransprüchen zu entnehmen. Darüber hinaus wird ein Elektrowerkzeug mit einem erfindungsgemäßen Taumelscheibenlager angegeben.

### Offenbarung der Erfindung

Das für ein Elektrowerkzeug mit einem Schlagwerk vorgeschlagene Taumelscheibenlager umfasst
- einen Innenring,
- einen Außenring,
- Lagerkugeln, über die der Außenring auf dem Innenring beweglich gelagert ist, und
- einen Käfig, in dem die Lagerkugeln geführt sind.

Erfindungsgemäß ist zur Abdichtung eines Lagerspalts zwischen dem Innenring und dem Außenring beidseits des Lagerspalts jeweils eine Dichtscheibe angeordnet, die
(i) am Käfig befestigt ist oder durch den Käfig ausgebildet wird und sich in radialer Richtung zumindest bereichsweise über den Außenring erstreckt oder
(ii) am Außenring befestigt ist oder durch den Außenring ausgebildet wird und sich in radialer Richtung zumindest bereichsweise über den Käfig erstreckt.

Die beidseits des Lagerspalts angeordneten Dichtscheiben wirken dem Eintrag von Partikeln in den Lagerspalt entgegen. Das heißt, dass weniger Partikel in den auf Rollreibung beanspruchten Kontaktbereich zwischen den Lagerkugeln und dem Innen- und Außenring gelangen. Entsprechend reduziert sich der Verschleiß in diesem Bereich.

Die Dichtscheiben sind entweder am Käfig oder am Außenring angeordnet. Die Dichtscheiben können dabei als separate Elemente am Käfig bzw. am Außenring befestigt sein oder durch eine entsprechende Gestaltung des Käfigs bzw. des Außenrings durch diesen ausgebildet werden. Die einteilige Ausführung besitzt jeweils den Vorteil, dass Montageschritte entfallen und damit die Montage erleichtert wird. Die separate Fertigung und nachträgliche Befestigung der Dichtscheiben am Käfig oder am Außenring besitzt den Vorteil, dass vorhandene Taumelscheibenlager nachträglich zu einem erfindungsgemäßen Taumelscheibenlager ertüchtigt werden können.

Die Abdichtung wird dadurch erzielt, dass die Dichtscheiben entweder am Käfig oder am Außenring angeordnet und sich in radialer Richtung jeweils über das andere Bauteil erstrecken, so dass der Lagerspalt n diesem Bereich durch die Dichtschieben abgedeckt wird. Kontakt zum jeweils anderen Bauteil besitzen die Dichtscheiben dabei nicht, so dass eine berührungslose Abdichtung geschaffen wird. Diese hat den Vorteil, dass sie nicht auf Reibung beansprucht wird und dadurch weniger verschleißbehaftet ist. Darüber hinaus entsteht aufgrund der fehlenden Reibung weniger Wärme im Lager.

Dadurch, dass sich die Dichtscheiben in radialer Richtung zumindest bereichsweise über den Außenring oder den Käfig erstrecken, kommt es zu einer Spaltausbildung zwischen den Dichtscheiben und dem Außenring bzw. dem Käfig. Der Spalt besitzt die Wirkung einer Labyrinthdichtung. Die Abdichtungswirkung wird demnach u.a. dadurch bewirkt, dass der zwischen den Dichtscheiben und dem Außenring bzw. dem Käfig verbleibende Spalt den Weg, den Partikel zurücklegen müssen, um in den Lagerspalt zu gelangen, verlängert. Bevorzugt wird daher die radiale Erstreckung der Dichtscheiben möglichst groß gewählt.

In Weiterbildung der Erfindung wird daher vorgeschlagen, dass bei Anordnung der Dichtscheiben am Käfig die Dichtscheiben in radialer Richtung vollständig über den Außenring geführt sind, weiterhin vorzugsweise die Dichtscheiben den Außenring außenumfangseitig umgreifen. Der Spalt zwischen den Dichtscheiben und dem Außenring wird dadurch länger und weist zudem mindestens einen Richtungswechsel auf. Die Abdichtungswirkung wird dadurch weiter verbessert.

Die Dichtscheiben, und zwar unabhängig davon, ob sie am Käfig oder am Außenring angeordnet sind, sind vorzugsweise zum Innenring beabstandet. Der Abstand zum Innenring gewährleistet, dass auch keine Reibung zwischen den Dichtscheiben und dem Innenring auftritt bzw. die Abdichtung tatsächlich berührungslos ist. Der Abstand ist auch hier möglichst klein gewählt, um dem Eintrag von Partikeln in den Lagerspalt entgegenzuwirken. Der Anstand der Dichtscheiben zum Innenring stellt zudem die Bewegungsfreiheit des die Dichtscheiben aufweisenden Käfigs bzw. Außenrings sicher.

Gemäß einer bevorzugten Ausführungsform der Erfindung ist der Käfig mehrteilig, insbesondere zweiteilig, ausgeführt und jede Dichtscheibe ist an einem Käfigteil befestigt oder wird durch ein Käfigteil ausgebildet. Die mehrteilige Ausführung des Käfigs erleichtert die Montage, da diese einzeln in den Lagerspalt eingesetzt werden können. Dies ist insbesondere von Vorteil, wenn die Geometrie der Dichtscheiben so gewählt ist, dass sie in der finalen Einbaulage den Außenring umgreifen bzw. bis hinter den Außenring geführt sind.

Des Weiteren wird vorgeschlagen, dass die Käfigteile über eine Press-, Steck-, Rast- oder Schnappverbindung verbunden sind. Die notwendige Verbindung der Käfigteile kann auf diese Weise direkt beim Einsetzen in den Lagerspalt erzielt werden, so dass die Montage weiter vereinfacht wird.

Vorteilhafterweise ist bzw. sind der Käfig und/oder die Dichtscheiben aus Kunststoff gefertigt. Als Kunststoffteil kann bzw. können der Käfig und/oder die Dichtscheiben besonders günstig hergestellt werden, beispielsweise mittels Spritzgießen.

Alternativ wird vorgeschlagen, dass die Dichtscheiben aus einem metallischen Werkstoff gefertigt sind. Dies ist insbesondere von Vorteil, wenn die Dichtscheiben am Außenring angeordnet sind, der vorzugsweise ebenfalls aus einem metallischen Werkstoff gefertigt ist. Die Dichtscheiben können dann bei separater Fertigung einfach mit dem Außenring verschweißt werden, so dass eine sehr robuste Verbindung erzielt wird. Die Fertigung der Dichtscheiben aus einem metallischen Werkstoff ermöglicht zudem die einteilige Herstellung der Dichtscheiben zusammen mit dem Außenring. Beispielsweise kann der Außenring innenumfangseitig beidseits mit einem sich in axialer Richtung erstreckenden Bund versehen werden, der nach der Montage des Lagers umgebogen wird, so dass sich der Bund dann in radialer Richtung erstreckt. Die Angaben "radial" und "axial" beziehen sich dabei auf den Außenring bzw. die Kreisform des Außenrings.

Darüber hinaus wird ein Elektrowerkzeug mit einem Schlagwerk, insbesondere einem pneumatischen Schlagwerk vorgeschlagen. Das vorgeschlagene Elektrowerkzeug weist ein erfindungsgemäßes Taumelscheibenlager auf, wobei vorzugsweise der Innenring des Taumelscheibenlagers auf einer Antriebswelle angeordnet und mit dieser fest verbunden ist. Der Innenring rotiert demnach mit der Antriebswelle. Der über die Lagerkugeln auf dem Innenring gelagerte Außenring führt dabei eine Taumelbewegung aus.

Um die Rotation der Antriebswelle in eine translatorische Bewegung zu wandeln ist vorzugsweise außenumfangseitig am Außenring des Taumelscheibenlagers ein Stift angeordnet, der an seinem dem Außenring abgewandten Ende in einem senkrecht zum Stift ausgerichteten, drehbar gelagerten Lagerbolzen aufgenommen ist.

Der Lagerbolzen ist vorzugsweise über Lagerbohrungen in einem Antriebszylinder des Schlagwerks drehbar gelagert, wobei der Antriebszylinder eine in einem Abstand parallel zu einer Rotationsachse der Antriebswelle verlaufende Längsachse aufweist. Die Rotationsbewegung der Antriebswelle wird auf diese Weise in eine translatorische Bewegung des Antriebszylinders parallel zur Rotationsachse der Antriebswelle gewandelt.

Ferner bevorzugt ist der Antriebszylinder endseitig gabelförmig ausgeführt und weist zwei Arme auf, in denen jeweils eine Lagerbohrung zur drehbaren Lagerung des Lagerbolzens ausgebildet ist.

Bevorzugte Ausführungsformen der Erfindung werden nachfolgend anhand der beigefügten Zeichnungen näher beschrieben. Diese zeigen:
- Fig. 1: eine perspektivische Darstellung einer ersten bevorzugten Ausführungsform eines erfindungsgemäßen Taumelscheibenlagers für ein Elektrowerkzeug mit Schlagwerk,
- Fig. 2: einen Längsschnitt durch das Taumelscheibenlager der Figur 1,
- Fig. 3: eine Explosionsdarstellung des Taumelscheibenlagers der Figur 1,
- Fig. 4: eine Explosionsdarstellung der Käfigteile des Käfigs des Taumelscheibenlagers der Figur 1,
- Fig. 5: eine perspektivische Darstellung einer weiteren bevorzugten Ausführungsform eines erfindungsgemäßen Taumelscheibenlagers a) vor der Montage der Dichtscheiben und b) nach der Montage der Dichtscheiben und
- Fig. 6: einen Längsschnitt durch ein Elektrowerkzeug mit Schlagwerk und einem Taumelscheibenlager.

### Ausführliche Beschreibung der Zeichnungen

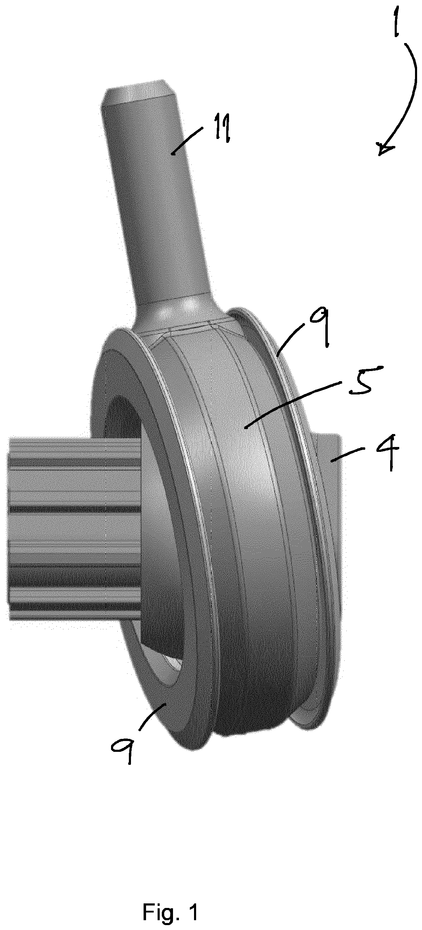

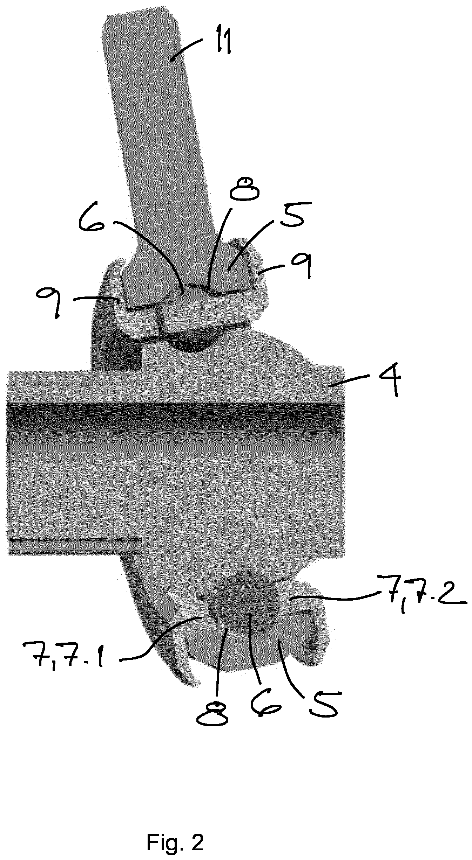

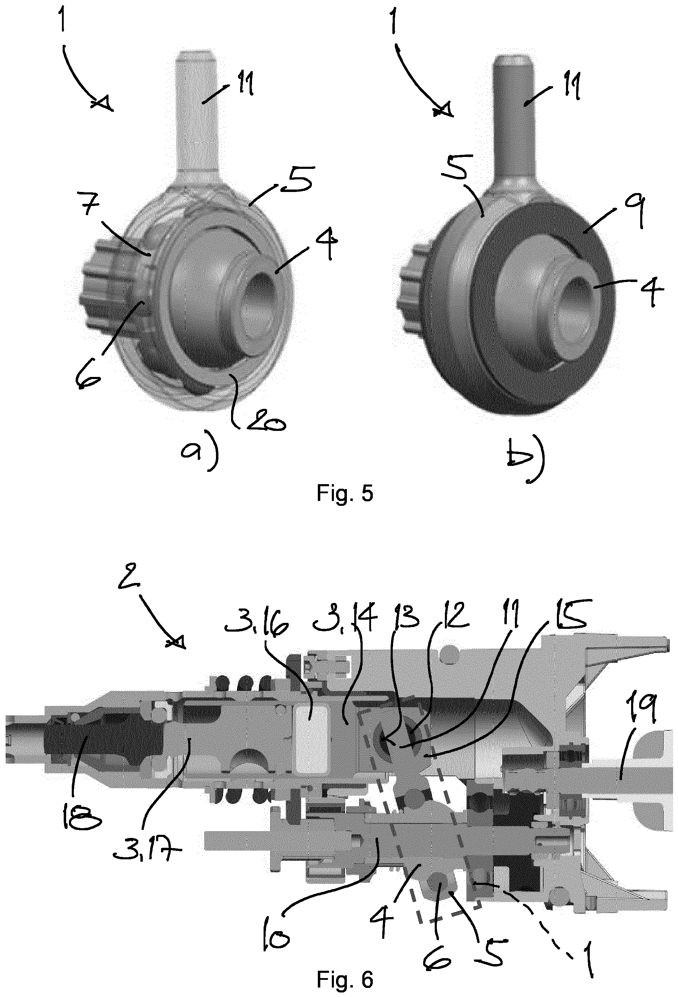

Den Figuren 1 und 2 ist ein erfindungsgemäßes Taumelscheibenlager 1 für ein Elektrowerkzeug 2 mit Schlagwerk 3, beispielsweise einem pneumatischen Schlagwerk 3 analog der Figur 6 dargestellt. Das dargestellte Taumelscheibenlager 1 weist einen Innenring 4, einen Außenring 5, Lagerkugeln 6 sowie einen Käfig 7 auf. Der Außenring 5 ist über die Lagerkugeln 6 auf dem Innenring 4 beweglich gelagert. Die Lagerkugeln 6 sind über den Käfig 7 geführt. Am Käfig 7 ist zur Abdichtung eines Lagerspalts 8 beidseits jeweils eine Dichtscheibe 9 angeordnet.

Wie insbesondere der Figur 2 zu entnehmen ist, sind die am Käfig 7 angeordneten Dichtscheiben 9 in radialer Richtung über den Außenring 5 geführt und endseitig abgewinkelt, so dass sie den Außenring 5 umgreifen. Zugleich halten die Dichtscheiben 9 einen Abstand zum Außenring 5 ein, so dass ein enger, mehrfach abgewinkelter Spalt ausgebildet wird. Dieser bildet eine Labyrinthdichtung aus, die verhindert, dass Partikel in den Lagerspalt 8 eingetragen werden.

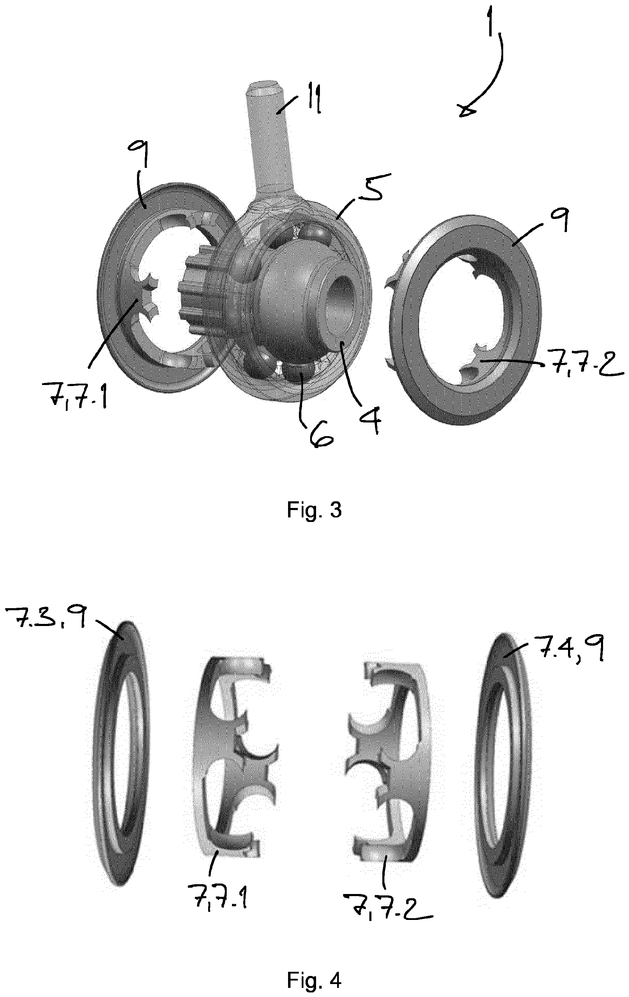

Um die Montage des in den Figuren 1 und 2 dargestellten Taumelscheibenlagers 1 zu erleichtern, ist der Käfig 7 mehrteilig ausgeführt, beispielsweise zweiteilig wie in der Figur 3 dargestellt oder vierteilig wie in der Figur 4 dargestellt. In der zweiteiligen Ausführung (siehe Figur 3) ist der Käfig 7 mittig geteilt bzw. halbiert, so dass zwei im Wesentlichen gleiche, aber gespiegelte Käfigteile 7.1, 7.2 ausgebildet werden. Diese können von zwei Seiten in das Lager eingesetzt und anschließend verbunden werden, beispielsweise mittels einer Schnappverbindung. Die mit dem jeweiligen Käfigteil 7.1, 7.2 verbundene Dichtscheibe 9 kann dabei um den Außenring 5 gelegt werden. In der vierteiligen Ausführung (siehe Figur 4) werden erst die beiden Käfigteile 7.1, 7.2 montiert, anschließend die separat gefertigten Dichtscheiben 9 mit den Käfigteilen 7.1, 7.2 verbunden.

Bei einer alternativen Ausführung unterscheidet sich die Montagereihenfolge. Es kann vorgesehen sein, dass zunächst die Dichtscheiben 9 mit den Käfigteilen 7.1, 7.2 verbunden bzw. gefügt werden und in einem darauf folgenden Schritt die Käfigteile 7.1, 7.2 montiert werden.

Die Verbindung kann eine Klebe-, Schweiß-, Press-, Steck-, Rast- oder Schnappverbindung sein. Die Dichtscheiben 9 bilden in diesem Fall weitere Käfigteile 7.3, 7.4 aus.

Eine weitere bevorzugte Ausführungsform eines erfindungsgemäßen Taumelscheibenlagers 1 ist den Figuren 5a) und 5b) zu entnehmen. Die Figur 5a) zeigt das Lager vor der Montage der Dichtscheiben 9, die Figur 5b) das Lager nach der Montage der Dichtscheiben 9. Die Dichtscheiben 9 sind bei dieser Ausführungsform am Außenring 5 angeordnet und mit diesem fest verbunden, beispielsweise verschweißt. Die Verbindung der Dichtscheiben 9 mit dem Außenring 5 erfolgt im Bereich seiner Stirnflächen 20. Die nachträgliche Montage der Dichtscheiben 9 besitzt den Vorteil, dass das Taumelscheibenlager 1 zunächst wie gewohnt montiert werden kann und nachträglich dann die Dichtscheiben 9 angebracht werden. Diese kontaktieren lediglich den Außenring 5, so dass eine berührungslose Abdichtung des Lagerspalts 8 über einen zwischen den Dichtscheiben 9 und dem Käfig 7 verbleibenden, schmalen Spalt geschaffen wird, der die Wirkung einer Labyrinthdichtung besitzt.

Der Figur 6 ist ein Elektrowerkzeug 2 mit einem Schlagwerk 3 zu entnehmen, in das ein erfindungsgemäßes Taumelscheibenlager 1 integrierbar ist. Das Schlagwerk 3 des dargestellten Elektrowerkzeugs 2 weist einen Antriebszylinder 14 auf, der über eine Luftfeder 16 mit einem Schlagkolben 17 wirkverbunden ist. Dieser wiederum wirkt auf einen Döpper 18 ein. Nicht dargestellt ist ein in das Elektrowerkzeug 2 eingespanntes Werkzeug, das im Betrieb des Elektrowerkzeugs 2 über das Schlagwerk 3 hin und her bewegt wird. Der Antrieb des Elektrowerkzeugs 2 erfolgt über einen Elektromotor (nicht dargestellt) mit einer Motorwelle 19, die mit einer Antriebswelle 10 wirkverbunden ist. Bei der Antriebswelle 10 kann es sich demnach auch um eine Zwischenwelle handeln. Auf der Antriebswelle 10 ist der Innenring 4 eines Taumelscheibenlagers 1 angeordnet, so dass dieser mit der Antriebswelle 10 rotiert. Der über die Lagerkugeln 6 auf dem Innenring 4 gelagerte Außenring 5 führt dabei eine Taumelbewegung aus, die über einen mit dem Außenring 5 verbundenen Stift 11, der andernends in einem Lagerbolzen 12 aufgenommen ist, auf den Antriebszylinder 14 des Schlagwerks 3 übertragen wird. Der Lagerbolzen 12 ist hierzu in Lagerbohrungen 13 eines gabelförmig ausgeführten und zwei Arme 15 ausbildenden Endes des Antriebszylinders 14 drehbar gelagert.

### Bezugszeichenliste

- 1: Taumelscheibenlager
- 2: Elektrowerkzeug
- 3: Schlagwerk
- 4: Innenring
- 5: Außenring
- 6: Lagerkugel
- 7: Käfig

- 7.1: Käfigteil
- 7.2: Käfigteil
- 7.3: Käfigteil
- 7.4: Käfigteil

- 8: Lagerspalt
- 9: Dichtscheibe
- 10: Antriebswelle
- 11: Stift
- 12: Lagerbolzen
- 13: Lagerbohrung
- 14: Antriebszylinder
- 15: Arm
- 16: Luftfeder
- 17: Schlagkolben
- 18: Döpper
- 19: Motorwelle
- 20: Stirnfläche

## Patentansprüche

1. Taumelscheibenlager (1) für ein Elektrowerkzeug (2) mit einem Schlagwerk (3), umfassend
- einen Innenring (4),
- einen Außenring (5),
- Lagerkugeln (6), über die der Außenring (5) auf dem Innenring (4) beweglich gelagert ist, und
- einen Käfig (7), in dem die Lagerkugeln (6) geführt sind,
**dadurch gekennzeichnet, dass** zur Abdichtung eines Lagerspalts (8) zwischen dem Innenring (4) und dem Außenring (5) beidseits des Lagerspalts (8) jeweils eine Dichtscheibe (9) angeordnet ist, die
(i) am Käfig (7) befestigt ist oder durch den Käfig (7) ausgebildet wird und sich in radialer Richtung zumindest bereichsweise über den Außenring (5) erstreckt oder
(ii) am Außenring (5) befestigt ist oder durch den Außenring (5) ausgebildet wird und sich in radialer Richtung zumindest bereichsweise über den Käfig (7) erstreckt.

2. Taumelscheibenlager nach Anspruch 1,
**dadurch gekennzeichnet, dass** die Dichtscheiben (9) zum Innenring (4) beabstandet sind.

3. Taumelscheibenlager (1) nach Anspruch 1 oder 2,
**dadurch gekennzeichnet, dass** der Käfig (7) mehrteilig, insbesondere zweiteilig, ausgeführt ist und jede Dichtscheibe (9) an einem Käfigteil (7.1, 7.2) befestigt oder durch ein Käfigteil (7.1, 7.2) ausgebildet wird.

4. Taumelscheibenlager (1) nach Anspruch 3,
**dadurch gekennzeichnet, dass** die Käfigteile (7.1, 7.2) über eine Press-, Steck-, Rast- oder Schnappverbindung verbunden sind.

5. Taumelscheibenlager (1) nach einem der vorhergehenden Ansprüche,
**dadurch gekennzeichnet, dass** der Käfig (7) und/oder die Dichtscheiben (9) aus Kunststoff gefertigt ist bzw. sind.

6. Taumelscheibenlager (1) nach einem der Ansprüche 1 bis 4,
**dadurch gekennzeichnet, dass** die Dichtscheiben (9) aus einem metallischen Werkstoff gefertigt sind.

7. Elektrowerkzeug (2) mit einem Schlagwerk (3), insbesondere einem pneumatischen Schlagwerk (3), aufweisend ein Taumelscheibenlager (1) nach einem der vorhergehenden Ansprüche, wobei vorzugsweise der Innenring (4) des Taumelscheibenlagers (1) auf einer Antriebswelle (10) angeordnet und mit dieser fest verbunden ist.

8. Elektrowerkzeug (2) nach Anspruch 7,
**dadurch gekennzeichnet, dass** außenumfangseitig am Außenring (5) des Taumelscheibenlagers (1) ein Stift (11) angeordnet ist, der an seinem dem Außenring (5) abgewandten Ende in einem senkrecht zum Stift ausgerichteten, drehbar gelagerten Lagerbolzen (12) aufgenommen ist.

9. Elektrowerkzeug (2) nach Anspruch 7 oder 8,
**dadurch gekennzeichnet, dass** der Lagerbolzen (12) über Lagerbohrungen (13) in einem Antriebszylinder (14) des Schlagwerks (3) drehbar gelagert ist, wobei der Antriebszylinder (14) eine in einem Abstand parallel zu einer Rotationsachse der Antriebswelle (10) verlaufende Längsachse aufweist.

10. Elektrowerkzeug (2) nach Anspruch 9,
**dadurch gekennzeichnet, dass** der Antriebszylinder (14) endseitig gabelförmig ausgeführt ist und zwei Arme (15) aufweist, in denen jeweils eine Lagerbohrung (13) zur drehbaren Lagerung des Lagerbolzens (12) ausgebildet ist.
